(19) Europäisches Patentamt
European Patent Office
Office européen des brevets

(11) **EP 3 955 163 B1**

(12) **EUROPEAN PATENT SPECIFICATION**

(45) Date of publication and mention
of the grant of the patent:
**20.05.2026 Bulletin 2026/21**

(21) Application number: **21790763.3**

(22) Date of filing: **29.06.2021**

(51) International Patent Classification (IPC):
**G08G 1/14** (2006.01)

(52) Cooperative Patent Classification (CPC):
**G08G 1/143**

(86) International application number:
**PCT/CN2021/103118**

(87) International publication number:
**WO 2022/002055 (06.01.2022 Gazette 2022/01)**

(54) **PARKING SPACE DISPLAY PROCESSING METHOD AND VEHICLE**

VERFAHREN ZUR VERARBEITUNG EINER PARKPLATZANZEIGE UND FAHRZEUG

PROCÉDÉ DE TRAITEMENT D'AFFICHAGE D'ESPACE DE STATIONNEMENT, ET VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.06.2020 CN 202010605442**

(43) Date of publication of application:
**16.02.2022 Bulletin 2022/07**

(73) Proprietors:
• **Guangzhou Chengxing Zhidong Motors
Technology Co., Ltd.
Guangzhou, Guangdong Province 510000 (CN)**
• **Guangzhou Xiaopeng Motors Technology Co.,
Ltd.
Guangzhou, Guangdong Province 510000 (CN)**

(72) Inventors:
• **YAN, Zhenjie
Guangzhou, Guangdong 510700 (CN)**
• **RAO, Heng
Guangzhou, Guangdong 510700 (CN)**
• **DAI, Guanqi
Guangzhou, Guangdong 510700 (CN)**

(74) Representative: **Yip, Matthew Wing Yu et al
Maucher Jenkins
Seventh Floor Offices
Artillery House
11-19 Artillery Row
London SW1P 1RT (GB)**

(56) References cited:
EP-A1- 3 499 191          CN-A- 109 427 199
CN-A- 109 693 666          CN-A- 110 794 970
CN-A- 110 794 970          CN-A- 111 738 191
JP-A- 2000 099 894          JP-A- 2016 118 851
US-A1- 2015 086 071          US-A1- 2017 355 307

## Description

## Cross Reference to Related Applications

The present application claims priority from prior application No. 202010605442.4, filed on 29 June 2020, and entitled "PARKING SPACE DISPLAY PROCESSING METHOD AND VEHICLE" .

## Field of Invention

The present invention relates to the technical field of smart vehicles, and in particular to a parking space display processing method and a vehicle.

## Background

In 3D parking, display of 3D images can increase display dimensions, and 3D visions of objects or scenes can be provided through 3D perspective views.

In a 3D perspective parking images, a vehicle model may extensively occlude an available parking space frame, resulting in poor visibility of the occluded planar parking space frame in 3D space. This may result in a user failing to discover in time an available parking space displayed on an interface, which affects user's parking experiences.

CN 110794970 discloses a three-dimensional display method, system, and vehicle for an automatic parking interface.

JP 2016118851 A discusses a virtual image display device that can guide an empty parking space by using a virtual image. JP 2000099894 A discusses a parking lot guiding system.

## Summary of Invention

A parking space display processing method and a vehicle are provided to solve or at least partially solve this problem. In accordance with the present invention, there are provided a method for processing display of parking spaces as recited by claim 1 and a vehicle as recited by claim 8. Preferred features are set out in the dependent claims.

The present invention has the following advantages:

A first planar parking space contour is displayed for an available parking space and a 3D occupancy model is displayed for an unavailable parking space when a vehicle starts 3D parking; then it is determined, based on a current display perspective, whether a target 3D occupancy model occludes a contour line of a target first planar parking space contour, such that display occlusion processing is performed when it is determined that the target 3D occupancy model occludes the contour line of the target first planar parking space contour, thereby achieving highlighted display of occluded available parking spaces in 3D parking, enhancing the visibility of occluded available parking space frames in 3D space and improving user's parking experience.

## Brief Description of Drawings

In order to explain the technical solutions of the present invention more clearly, the drawings used in the description of the present invention will be briefly introduced below. Obviously, the drawings in the following description are just some embodiments of the present invention. For those of ordinary skill in the art, other drawings can be obtained based on these drawings without creative efforts.

Fig. 1 is a flowchart illustrating steps of a parking space display processing method provided by the present invention.
Fig. 2a is a schematic diagram of 3D parking according to the present invention.
Fig. 2b is a schematic diagram of another 3D parking according to the present invention.
Fig. 3 is a flowchart illustrating steps of another parking space display processing method according to the present invention.
Fig. 4 is a schematic diagram of an occlusion determination example according to the present invention.
Fig. 5 is a flowchart illustrating steps of another parking space display processing method according to the present invention.
Fig. 6 is a flowchart illustrating steps of another parking space display processing method according to the present invention.
Fig. 7 is a flowchart illustrating steps of another parking space display processing method according to the present invention.
Fig. 8 is a schematic structural diagram of a vehicle according to the present invention.

## Detailed Description

In order to make the purpose, features and advantages of the present invention clear and easy to understand, the present invention will be further described in detail with reference to the accompanying drawings and specific implementation.

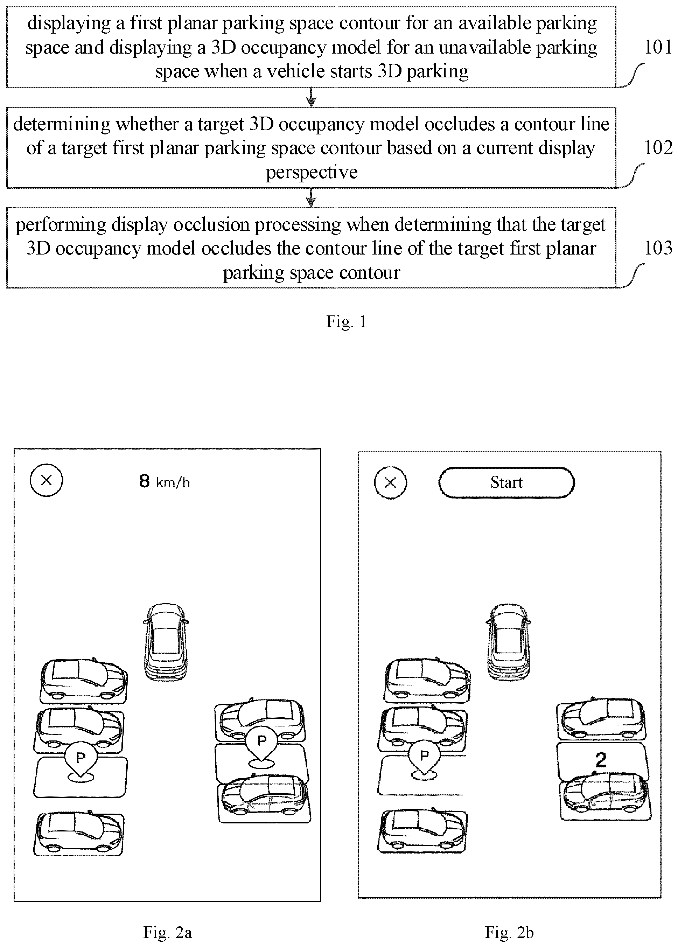

Referring to Fig. 1, a flowchart illustrating steps of a parking space display processing method according to the present invention is shown, the method may specifically include the following steps:

step 101: displaying a first planar parking space contour for an available parking space and displaying a 3D occupancy model for an unavailable parking space when a vehicle starts 3D parking.

The first planar parking space contour may be a planar contour for an available parking space displayed in a 3D parking interface, such as parking space frames of the available parking space; and the 3D occupancy model may be a 3D model for an unavailable parking space displayed on the 3D parking interface, such as a vehicle model or an obstacle model on the unavailable parking space.

When the vehicle starts 3D parking, an available parking space and an unavailable parking space may be displayed on the 3D parking interface, the first planar parking space contour may be displayed for the available parking space, and the 3D occupancy model may be displayed for the unavailable parking space.

Specifically, when a user is parking, the 3D parking display interface may be displayed to the user via an in-vehicle screen after the vehicle starts 3D parking. An available parking space and an unavailable parking space may be displayed on the 3D parking interface, parking space frames of the parking space may be displayed on the available parking space, and a vehicle model or an obstacle model for occupying a space may be displayed on the unavailable parking space.

step 102: determining whether a target 3D occupancy model occludes a contour line of a target first planar parking space contour based on a current display perspective.

As an example, the current display perspective may be a viewing angle under a current 3D parking display interface displayed on the in-vehicle screen.

The target 3D occupancy model may be a 3D occupancy model displayed on an unavailable parking space adjacent to an available parking space in a projection direction of the 3D occupancy model at the current display perspective; and the target first planar parking space contour may be a first planar parking space contour in a projection direction of the target 3D occupancy model.

After the current viewing angle is determined, the target 3D occupancy model displayed on the unavailable parking space adjacent to the available parking space in the projection direction of the 3D occupancy model, and the first planar parking space contour in the projection direction of the target 3D occupancy model may be acquired at the current display perspective for 3D parking, so as to determine whether the target 3D occupancy model occludes the contour line of the target first planar parking space contour.

In a display image for 3D parking, the spatial location, contour and projection of an object may be displayed by lines, so as to obtain a perspective view showing 3D effects. In a display interface for 3D parking, an available parking space and an unavailable parking space at the current viewing angle may be displayed. A 3D occupancy model at the current viewing angle may be displayed on an unavailable parking space, and the 3D occupancy model may have a perspective projection (i.e., a projection at the current viewing angle of the 3D occupancy model). A 3D occupancy model may have projections in different directions at different display viewing angles.

For example, an image displayed on the current 3D parking interface of the in-vehicle screen is a 3D parking image at the current viewing angle, such that at this viewing angle, the 3D occupancy model on the unavailable parking space in the 3D parking image may have a projection at the current viewing angle, and the direction of the projection may be the projection direction of the 3D occupancy model.

step 103: performing display occlusion processing when it is determined that the target 3D occupancy model occludes the contour line of the target first planar parking space contour.

In a specific implementation, it can be determined whether there is an occlusion relationship between the target 3D occupancy model and the target first planar parking space contour, such that display occlusion processing can be performed for the target 3D occupancy model and/or the target first planar parking space contour when it is determined that the target 3D occupancy model occludes the contour line of the target first planar parking space contour, so as to display the user the available parking space subjected to display occlusion processing.

For example, in a 3D parking display interface, it can be determined whether the vehicle model occludes a parking space frame of an available parking space, and when the vehicle model occludes the parking space frame of the available parking space, it can be determined that there is an occlusion relationship, such that occlusion for available parking spaces in 3D parking can be solved by display occlusion processing.

In the present invention, step 103 may include the following sub-steps:
weakening the display of the target 3D occupancy model when it is determined that the target 3D occupancy model occludes the contour line of the target first planar parking space contour; and/or enhancing the display of the target first planar parking space contour when it is determined that the target 3D occupancy model occludes the contour line of the target first planar parking space contour.

Display occlusion processing may be performed when it is determined that the target 3D occupancy model occludes the contour line of the target first planar parking space contour, i.e., display of the target 3D occupancy model may be weakened, and/or display of the target first planar parking space contour may be enhanced, such that a 3D parking display interface subjected to display occlusion processing can be obtained for display to the user.

If it is determined that there is no occlusion between a vehicle model and a parking space frame of an available parking space, the vehicle model may be displayed normally; and if it is determined that there is occlusion between the vehicle model and the parking space frame of the available parking space, as shown in Fig. 2a, there is occlusion between the available parking space with a P icon on the right and the vehicle model below, i.e., the vehicle model occludes the parking space frame of the available parking space with the P icon. As a result, the contour of the parking space frame is not displayed fully. In this case, transparency of the vehicle model may be reduced to a suitable value, such as 50%, thereby ensuring that the contour of the parking space frame of the available parking space can be displayed fully.

If it is determined that there is occlusion between a vehicle model and a parking space frame of an available parking space, the contour of the parking space frame of the available parking space may be enhanced, for example, lines of the parking space frame may be thickened, so as to ensure that the contour of the parking space frame of the available parking space can be highlighted.

In the present invention, the method may include the following step:
displaying a floating UI parking icon within the first planar parking space contour for the available parking space.

The floating UI parking icon may be a floating UI icon displayed on the available parking space of the 3D parking interface, for example, a 3D floating P icon may be displayed on the available parking space.

When a user is parking, the 3D parking display interface may be displayed to the user via the in-vehicle screen after the vehicle starts 3D parking, in which an available parking space and an unavailable parking space may be displayed, and for the available parking space, a floating UI parking icon may be displayed in parking space frames of the available parking space to highlight the available parking space.

Enhanced display may be performed for the available parking space. When the 3D parking interface on the in-vehicle screen is in a state of looking for a parking space, after an available parking space is found, a 3D floating P icon (e.g., the P icon in Fig. 2a) will be displayed on the available parking space (i.e., in a parking space frame of the available parking space), thereby enhancing the user's 3D perception of the available parking space.

When a user is in a state of looking for a parking space and a new available parking space is scanned while the vehicle is running, a prompt sound may be generated and a 3D floating P icon will be displayed in a parking space frame of the new available parking space.

In the present invention, the method may include the following steps:
skipping displaying floating UI parking icons within first planar parking space contours for other available parking spaces when a target available parking space is selected.

When a user is parking, it can be determined that the user is in a parking state when the user selects a target available parking space, such that floating UI parking icons for other available parking spaces are not displayed in the parking space frames of the available parking spaces on the 3D parking interface.

When the in-vehicle screen receives a signal that the user has selected an available parking space, in order to facilitate the user to click to switch the parking space, the 3D floating P icon of the selected parking space may be kept, while 3D floating P icons of other unselected parking spaces will disappear, as shown in Fig. 2b. The available parking space with a P icon may be a parking space selected by the user, and an available parking space marked with 2 may be a parking space not selected by the user. If the user is in the state of looking for a parking space once more, the 3D floating P icons for other unselected parking spaces may be re-displayed on the 3D parking interface.

In a specific implementation, a first planar parking space contour is displayed for an available parking space and a 3D occupancy model is displayed for an unavailable parking space when a vehicle starts 3D parking; then it is determined, based on a current display perspective, whether a target 3D occupancy model occludes a contour line of a target first planar parking space contour, such that display occlusion processing is performed when it is determined that the target 3D occupancy model occludes the contour line of the target first planar parking space contour, thereby achieving highlighted display of occluded available parking spaces in 3D parking, enhancing the visibility of occluded available parking space frames in 3D space and improving user's parking experience.

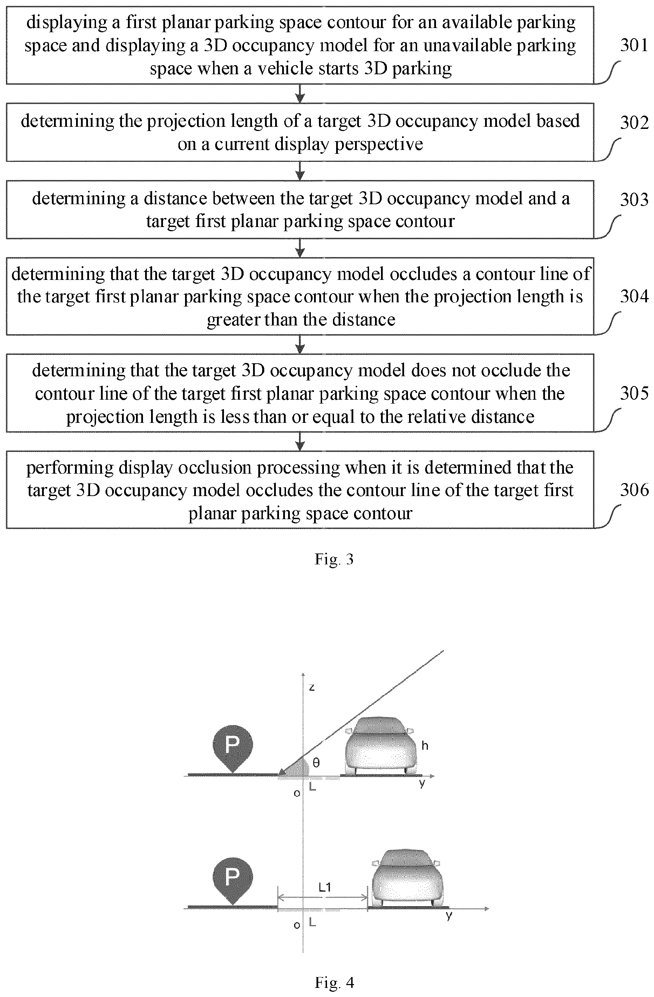

Referring to Fig. 3, a flowchart illustrating steps of a parking space display processing method provided by the present invention is shown, the method may specifically include the following steps:
step 301: displaying a first planar parking space contour for an available parking space and displaying a 3D occupancy model for an unavailable parking space when a vehicle starts 3D parking.

When the vehicle starts 3D parking, an available parking space and an unavailable parking space may be displayed on the 3D parking interface, the first planar parking space contour may be displayed for the available parking space, and the 3D occupancy model may be displayed for the unavailable parking space.
step 302: determining the projection length of a target 3D occupancy model based on a current display perspective.

The projection length may be the length between a projection of the target 3D occupancy model and the parking space contour on a projection side of the parking space in which the target 3D occupancy model is located, e.g., the length between the projection of the vehicle model on an unavailable parking space and the parking space frame on the projection side of the model (e.g., a section "L" in Fig. 4 may be a projection length).

After the current viewing angle is determined, the length between the projection of the target 3D occupancy model and the parking space contour on the projection side of the parking space in which the target 3D occupancy model is located may be obtained at the current display perspective for 3D parking as the projection length of the target 3D occupancy model.

In the present invention, Step 302 may include the following sub-steps:

determining an included angle between the current display perspective and the ground; determining the height of the target 3D occupancy model; and determining the projection length of the target 3D occupancy model based on the included angle and the height.

The included angle between the current display perspective and the ground as well as the height may be obtained for the target 3D occupancy model when determining the projection length of the target 3D occupancy model, such that the projection length of the target 3D occupancy model can be calculated based on the obtained included angle and the height for the target 3D occupancy model.

Specifically, when an available parking space and an unavailable parking space at an adjacent location in the projection direction are displayed at a current display perspective for 3D parking, the viewing angle may be a viewing angle of a 3D virtual camera which may be a camera corresponding to the viewing angle displayed by the current 3D parking interface on an in-vehicle screen, as shown in Fig. 4. The projection length of an occupancy vehicle model (i.e., the projection length of the target 3D occupancy model) may be calculated in the following way based on the included angle between the viewing angle of the camera and the ground (i.e., the included angle between the current display perspective and the ground) and the height of the occupancy vehicle model on the unavailable parking space (i.e., the height of the target 3D occupancy model):

$$L = \mathrm{h}/\tan\theta$$

where $\theta$ may be the included angle between the viewing angle of the camera and the ground, h may be the height of the occupancy vehicle model, and $L$ may be the projection length of the occupancy vehicle model.

If the projection of the occupancy vehicle model on the unavailable parking space overlaps the available parking space frame, the projection length of the occupancy vehicle model may be the minimum safe distance in this case, i.e., the projection of the occupancy vehicle model may not occlude the available parking space frame.

step 303: determining a distance between the target 3D occupancy model and the target first planar parking space contour.

The distance may be a distance between the contour line of the target 3D occupancy model and the target first planar parking space contour, or the distance between the target 3D occupancy model and the target first planar parking space contour, e.g., the distance between the contour line of the occupancy vehicle model and the parking space frame of the adjacent available parking space, or the distance between the occupancy vehicle model and the parking space frame of the adjacent available parking space.

The distance between the occupancy vehicle model and the parking space frame of the available parking space may be calculated based on relative coordinates for the occupancy vehicle model and the parking space frame of the available parking space.

As shown in Fig. 4, the distance between two adjacent parking spaces (i.e., the distance between the target 3D occupancy model and the target first planar parking space contour) may be calculated based on relative coordinates of the occupancy vehicle model on the unavailable parking space and relative coordinates of the adjacent available parking space, and the distance may be denoted as L1.

step 304: determining that the target 3D occupancy model occludes the contour line of the target first planar parking space contour when the projection length is greater than the distance.

It can be determined that the target 3D occupancy model occludes the contour line of the target first planar parking space contour when the projection length of the target 3D occupancy model is greater than the distance between the target 3D occupancy model and the target first planar parking space contour.

As shown in Fig. 4, when the projection length L of the occupancy vehicle model is greater than the distance L1 between two adjacent parking spaces, it can be determined that the occupancy vehicle model occludes the parking space frame of the available parking space, i.e., there is occlusion between the occupancy vehicle model and the available parking space.

step 305: determining that the target 3D occupancy model does not occlude the contour line of the target first planar parking space contour when the projection length is less than or equal to the distance.

It can be determined that the target 3D occupancy model does not occlude the contour line of the target first planar parking space contour when the projection length of the target 3D occupancy model is less than or equal to the distance between the target 3D occupancy model and the target first planar parking space contour.

As shown in Fig. 4, when the projection length L of the occupancy vehicle model is less than or equal to the distance L1 between two adjacent parking spaces, it can be determined that the occupancy vehicle model does not occlude the parking space frame of the available parking space, i.e., there is no occlusion between the occupancy vehicle model and the available parking space.

step 306: performing display occlusion processing when it is determined that the target 3D occupancy model occludes the contour line of the target first planar parking space contour.

It can be determined whether there is an occlusion relationship between the target 3D occupancy model and the target first planar parking space contour, such that display occlusion processing can be performed for the target 3D occupancy model and/or the target first planar parking space contour when it is determined that the target 3D occupancy model occludes the contour line of the target first planar parking space contour, so as to display the user the available parking space subjected to display occlusion processing.

A first planar parking space contour is displayed for an available parking space and a 3D occupancy model is displayed for an unavailable parking space when a vehicle starts 3D parking; then the projection length of a target 3D occupancy model is determined based on a current display perspective, and a distance between the target 3D occupancy model and a target first planar parking space contour is determined. When the projection length is greater than the distance, it is determined that the target 3D occupancy model occludes the contour line of the target first planar parking space contour, and when the projection length is less than or equal to the distance, it is determined that the target 3D occupancy model does not occlude the contour line of the target first planar parking space contour, such that display occlusion processing is performed when it is determined that the target 3D occupancy model occludes the contour line of the target first planar parking space contour, thereby achieving highlighted display of occluded available parking spaces in 3D parking, enhancing the visibility of occluded available parking space frames in 3D space and improving user's parking experience when it is determined that there is an occlusion relationship between the projection length of the model and the distance between the model and the parking space contour.

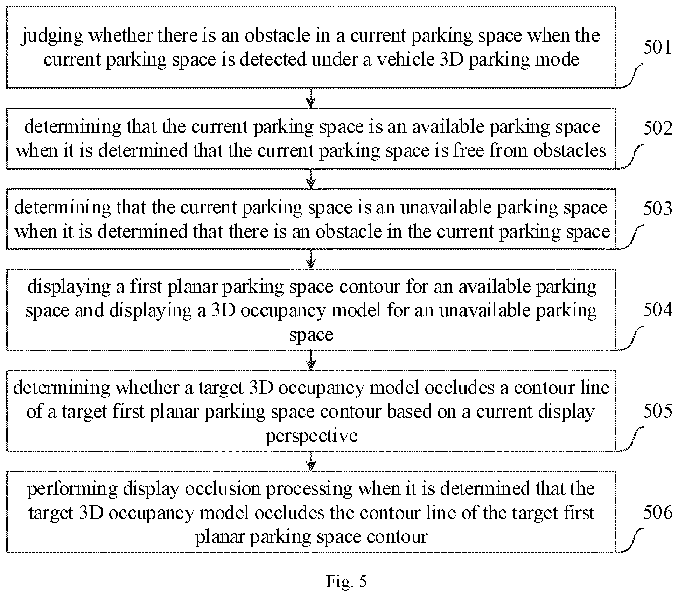

Referring to Fig. 5, a flowchart illustrating steps of another parking space display processing method according to the present invention is shown, the method may specifically include the following steps:

step 501: determining whether there is an obstacle in a current parking space when the current parking space is detected under a vehicle 3D parking mode.

The current parking space may be a parking space in a current environment obtained when the vehicle starts 3D parking. For example, all parking spaces in the environment in which the vehicle in a state of looking for a parking space is located may be detected and displayed by type for the current parking space.

When the vehicle starts 3D parking, the current parking space in the current environment of the vehicle may be obtained through detection, and then it is determined whether there is an obstacle in the current parking space.

When parking spaces are detected and displayed by type, a parking space line of the current parking space may be identified by an intelligent control module of the vehicle via a lateral camera, and any obstacle in the current parking space may be validated by a lateral ultrasonic radar.

step 502: determining that the current parking space is an available parking space when it is determined that the current parking space is free from obstacles.

In a specific implementation, the current parking space may be determined as an available parking space when it is determined that the current parking space is free from obstacles, so as to display the available parking space on the 3D parking interface.

For example, if there is an obstacle in the current parking space, a signal of unavailable parking and physical coordinates of the parking space relative to the vehicle may be output to a rendering module of the in-vehicle screen for display on the in-vehicle screen, i.e., an unavailable parking space relative to the vehicle model may be displayed on the 3D parking interface of the in-vehicle screen, which may include the parking space frame of the unavailable parking space and the occupancy vehicle model in the parking space.

step 503: determining that the current parking space is an unavailable parking space when it is determined that there is an obstacle in the current parking space.

The current parking space may be determined as an unavailable parking space when it is determined that there is an obstacle in the current parking space, so as to display the unavailable parking space on the 3D parking interface. For example, if a portion of or the entire obstacle is located in the current parking space, it can be determined that there is an obstacle in the current parking space.

Specifically, if the current parking space is free from obstacles, a signal of available parking and physical coordinates of the parking space relative to the vehicle may be output to the rendering module of the in-vehicle screen for display on the in-vehicle screen, i.e., an available parking space relative to the vehicle model may be displayed on the 3D parking interface of the in-vehicle screen, which may include the parking space frame of the available parking space.

step 504: displaying a first planar parking space contour for an available parking space and displaying a 3D occupancy model for an unavailable parking space.

After the available parking space and the unavailable parking space are determined, the first planar parking space contour for the available parking space and the 3D occupancy model for the unavailable parking space may be displayed on the 3D parking interface.

step 505: determining whether a target 3D occupancy model occludes a contour line of a target first planar parking space contour based on a current display perspective.

After the current viewing angle is determined, the target 3D occupancy model displayed on the unavailable parking space adjacent to the available parking space in the projection direction of the 3D occupancy model, and the first planar parking space contour in the projection direction of the target 3D occupancy model may be acquired at the current display perspective for 3D parking, so as to determine whether the target 3D occupancy model occludes the contour line of the target first planar parking space contour.

step 506: performing display occlusion processing when it is determined that the target 3D occupancy model occludes the contour line of the target first planar parking space contour.

It can be determined whether there is an occlusion relationship between the target 3D occupancy model and the target first planar parking space contour, such that display occlusion processing can be performed for the target 3D occupancy model and/or the target first planar parking space contour when it is determined that the target 3D occupancy model occludes the contour line of the target first planar parking space contour, so as to display the user the available parking space subjected to display occlusion processing.

It is determined whether there is an obstacle in a current parking space when the current parking space is detected under a vehicle 3D parking mode, the current parking space is determined to be an available parking space when it is determined that the current parking space is free from obstacles, and the current parking space is determined to be an unavailable parking space when it is determined that there is an obstacle in the current parking space; a first planar parking space contour is displayed for an available parking space and a 3D occupancy model is displayed for an unavailable parking space; and then it is determined whether a target 3D occupancy model occludes a contour line of a target first planar parking space contour based on a current display perspective, such that display occlusion processing is performed when it is determined that the target 3D occupancy model occludes the contour line of the target first planar parking space contour, thereby achieving highlighted display of occluded available parking spaces in 3D parking, enhancing the visibility of occluded available parking space frames in 3D space and improving user's parking experience when an available parking space and an unavailable parking space are determined by detecting whether there is an obstacle in the current parking space, and when it is determined that there is an occlusion relationship between the model and the parking space contour line.

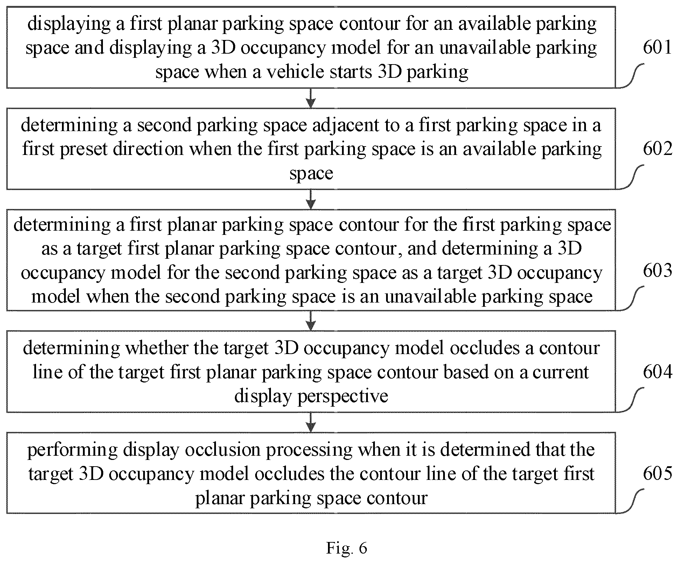

Referring to Fig. 6, a flowchart illustrating steps of another parking space display processing method provided by the present invention is shown, the method may specifically include the following steps:

step 601: displaying a first planar parking space contour for an available parking space and displaying a 3D occupancy model for an unavailable parking space when a vehicle starts 3D parking.

When the vehicle starts 3D parking, an available parking space and an unavailable parking space may be displayed on the 3D parking interface, the first planar parking space contour may be displayed for the available parking space, and the 3D occupancy model may be displayed for the unavailable parking space.

step 602: determining a second parking space adjacent to a first parking space in a first preset direction when the first parking space is an available parking space.

As an example, the first parking space may be a parking space determined when determining the occlusion relationship between the 3D occupancy model and the first planar parking space contour. For example, a parking space displayed on the 3D parking interface may be taken as the first parking space to determine the occlusion relationship for the parking space. The first preset direction may be a direction opposite to the projection direction of the 3D occupancy model.

When the first parking space is an available parking space, a parking space adjacent to the available parking space in the direction opposite to the projection direction of the 3D occupancy model may be obtained as the second parking space.

step 603: determining a first planar parking space contour for the first parking space as the target first planar parking space contour, and determining a 3D occupancy model for the second parking space as the target 3D occupancy model when the second parking space is an unavailable parking space.

When the second parking space is an unavailable parking space, the first planar parking space contour of the first parking space may be determined as the target first planar parking space contour, and the 3D occupancy model of the second parking space may be determined as the target 3D occupancy model, so as to display a first planar parking space contour for an available parking space and a 3D occupancy model for an unavailable parking space on the 3D parking interface.

step 604: determining whether a target 3D occupancy model occludes a contour line of a target first planar parking space contour based on a current display perspective.

After the current viewing angle is determined, the target 3D occupancy model displayed on the unavailable parking space adjacent to the available parking space in the projection direction of the 3D occupancy model, and the first planar parking space contour in the projection direction of the target 3D occupancy model may be acquired at the current display perspective for 3D parking, so as to determine whether the target 3D occupancy model occludes the contour line of the target first planar parking space contour.

step 605: performing display occlusion processing when it is determined that the target 3D occupancy model occludes the contour line of the target first planar parking space contour.

It can be determined whether there is an occlusion relationship between the target 3D occupancy model and the target first planar parking space contour, such that display occlusion processing can be performed for the target 3D occupancy model and/or the target first planar parking space contour when it is determined that the target 3D occupancy model occludes the contour line of the target first planar parking space contour, so as to display the user the available parking space subjected to display occlusion processing.

A first planar parking space contour is displayed for an available parking space and a 3D occupancy model is displayed for an unavailable parking space when a vehicle starts 3D parking; a second parking space adjacent to a first parking space in a first preset direction is determined when the first parking space is an available parking space, a first planar parking space contour for the first parking space is determined as a target first planar parking space contour when the second parking space is an unavailable parking space, and a 3D occupancy model for the second parking space is determined as a target 3D occupancy model; then it is determined whether the target 3D occupancy model occludes a contour line of the target first planar parking space contour, such that display occlusion processing is performed when it is determined that the target 3D occupancy model occludes the contour line of the target first planar parking space contour, thereby achieving highlighted display of occluded available parking spaces in 3D parking, enhancing the visibility of occluded available parking space frames in 3D space and improving user's parking experience.

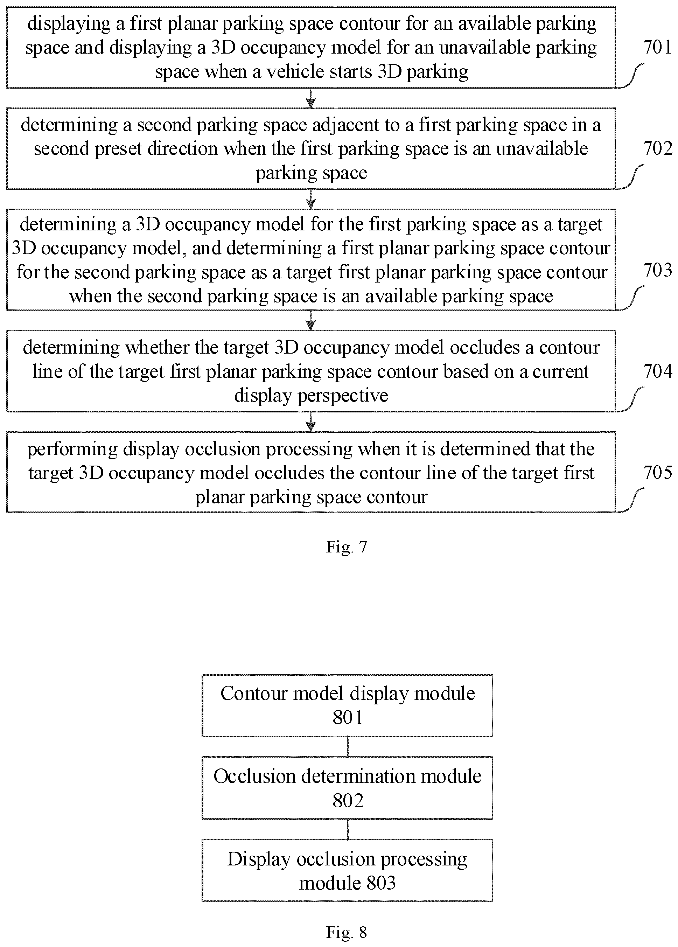

Referring to Fig. 7, a flowchart illustrating steps of another parking space display processing method provided by the present invention is shown, the method may specifically include the following steps:

step 701: displaying a first planar parking space contour for an available parking space and displaying a 3D occupancy model for an unavailable parking space when a vehicle starts 3D parking.

When the vehicle starts 3D parking, an available parking space and an unavailable parking space may be displayed on the 3D parking interface, the first planar parking space contour may be displayed for the available parking space, and the 3D occupancy model may be displayed for the unavailable parking space.

step 702: determining a second parking space adjacent to a first parking space in a second preset direction when the first parking space is an unavailable parking space.

The second preset direction may be a projection direction of the 3D occupancy model.

When the first parking space is an unavailable parking space, a parking space adjacent to the unavailable parking space in the projection direction of the 3D occupancy model may be obtained as the second parking space.

step 703: determining a 3D occupancy model for the first parking space as the target 3D occupancy model, and determining a first planar parking space contour for the second parking space as the target first planar parking space contour when the second parking space is an available parking space.

When the second parking space is an available parking space, the 3D occupancy model for the first parking space may be determined as the target 3D occupancy model, and the first planar parking space contour for the second parking space may be determined as the target first planar parking space contour, so as to display a first planar parking space contour for an available parking space and a 3D occupancy model for an unavailable parking space on the 3D parking interface.

step 704: determining whether a target 3D occupancy model occludes a contour line of a target first planar parking space contour based on a current display perspective.

After the current viewing angle is determined, the target 3D occupancy model displayed on the unavailable parking space adjacent to the available parking space in the projection direction of the 3D occupancy model, and the first planar parking space contour in the projection direction of the target 3D occupancy model may be acquired at the current display perspective for 3D parking, so as to determine whether the target 3D occupancy model occludes the contour line of the target first planar parking space contour.

step 705: performing display occlusion processing when it is determined that the target 3D occupancy model occludes the contour line of the target first planar parking space contour.

It can be determined whether there is an occlusion relationship between the target 3D occupancy model and the target first planar parking space contour, such that display occlusion processing can be performed for the target 3D occupancy model and/or the target first planar parking space contour when it is determined that the target 3D occupancy model occludes the contour line of the target first planar parking space contour, so as to display the user the available parking space subjected to display occlusion processing.

A first planar parking space contour is displayed for an available parking space and a 3D occupancy model is displayed for an unavailable parking space when a vehicle starts 3D parking; when a first parking space is an unavailable parking space, a second parking space adjacent to the first parking space in a second preset direction is determined, and when the second parking space is an available parking space, a 3D occupancy model for the first parking space is determined as a target 3D occupancy model and a first planar parking space contour for the second parking space is determined as a target first planar parking space contour; then it is determined, based on a current display perspective, whether the target 3D occupancy model occludes a contour line of the target first planar parking space contour, such that display occlusion processing is performed when it is determined that the target 3D occupancy model occludes the contour line of the target first planar parking space contour, thereby achieving highlighted display of occluded available parking spaces in 3D parking, enhancing the visibility of occluded available parking space frames in 3D space and improving user's parking experience.

It should be noted that, for the sake of simple description, method embodiments are all expressed as a series of action combinations, but a person skilled in the art should know that the embodiments of the present invention are not limited by the described sequence of actions, since some steps may be performed in other sequences or simultaneously according to the embodiments of the present invention. In addition, a person skilled in the art should also know that the embodiments described in the specification are all preferred embodiments, and that actions involved are not necessarily essential for the embodiments of the present invention.

Referring to Fig. 8, a schematic structural diagram of a vehicle according to the present invention is shown, the vehicle may specifically include the following modules:

a contour model display module 801, configured to display a first planar parking space contour for an available parking space and display a 3D occupancy model for an unavailable parking space when the vehicle starts 3D parking;

an occlusion determination module 802, configured to determine whether a target 3D occupancy model occludes a contour line of a target first planar parking space contour based on a current display perspective; and call a display occlusion processing module 803 when it is determined that the target 3D occupancy model occludes the contour line of the target first planar parking space contour; and

the display occlusion processing module 803, configured to perform display occlusion processing.

The target first planar parking space contour is a first planar parking space contour in a projection direction of the target 3D occupancy model, and the occlusion determination module 802 includes:

a projection length determining submodule, configured to determine the projection length of the target 3D occupancy model based on the current display perspective;

a distance determining submodule, configured to determine a distance between the target 3D occupancy model and the target first planar parking space contour;

a first occlusion determination submodule, configured to determine that the target 3D occupancy model occludes the contour line of the target first planar parking space contour when the projection length is greater than the distance; and

a second occlusion determination submodule, configured to determine that the target 3D occupancy model does not occlude the contour line of the target first planar parking space contour when the projection length is less than or equal to the distance.

The projection length determining submodule includes:

an included angle determining unit, configured to determine an included angle between the current display perspective and the ground;

a height determining unit, configured to determine the height of the target 3D occupancy model; and

a projection length determining unit, configured to determine the projection length of the target 3D occupancy model based on the included angle and the height.

The vehicle may further include:

a second parking space determining module in a first preset direction, configured to determine a second parking space adjacent to a first parking space in the first preset direction when the first parking space is an available parking space, where the first preset direction is a direction opposite to the projection direction of the 3D occupancy model; and

a target 3D occupancy model determining module, configured to determine a first planar parking space contour for the first parking space as the target first planar parking space contour, and determine a 3D occupancy model for the second parking space as the target 3D occupancy model when the second parking space is an unavailable parking space.

The vehicle may further include:

a second parking space determining module in a second preset direction, configured to determine a second parking space adjacent to a first parking space in the second preset direction when the first parking space is an unavailable parking space, where the second preset direction is the projection direction of the 3D occupancy model; and

a target first planar parking space contour determining module, configured to determine a 3D occupancy model for the first parking space as the target 3D occupancy model, and determine a first planar parking space contour for the second parking space as the target first planar parking space contour when the second parking space is an available parking space.

The vehicle may further include:

an obstacle determination module, configured to determine whether there is an obstacle in a current parking space when the current parking space is detected;

an available parking space determining module, configured to determine that the current parking space is an available parking space when it is determined that the current parking space is free from obstacles; and

an unavailable parking space determining module, configured to determine that the current parking space is an unavailable parking space when it is determined that there is an obstacle in the current parking space.

The display occlusion processing module 803 may include:

a weakening submodule, configured to weaken the display of the target 3D occupancy model when it is determined that the target 3D occupancy model occludes the contour line of the target first planar parking space contour; and/or
an enhancing submodule, configured to enhance the display of the target first planar parking space contour when it is determined that the target 3D occupancy model occludes the contour line of the target first planar parking space contour.

The vehicle may further include:
a floating UI parking icon display module, configured to display a floating UI parking icon within the first planar parking space contour for the available parking space.

The vehicle may further include:
a floating UI parking icon non-display module, configured to skip displaying floating UI parking icons within first planar parking space contours for other available parking spaces when a target available parking space is selected.

In a specific implementation, a first planar parking space contour is displayed for an available parking space and a 3D occupancy model is displayed for an unavailable parking space when a vehicle starts 3D parking; then it is determined, based on a current display perspective, whether a target 3D occupancy model occludes a contour line of a target first planar parking space contour, such that display occlusion processing is performed when it is determined that the target 3D occupancy model occludes the contour line of the target first planar parking space contour, thereby achieving highlighted display of occluded available parking spaces in 3D parking, enhancing the visibility of occluded available parking space frames in 3D space and improving user's parking experience.

An embodiment of the present invention further provides a vehicle, including a processor, a memory and a computer program stored on the memory and capable of running on the processor, where the computer program, when executed by the processor, performs the steps of the parking space display processing method.

An embodiment of the present invention further provides a computer-readable storage medium, where a computer program stored in the computer-readable storage medium, when executed by a processor, performs the steps of the parking space display processing method.

Because the apparatus embodiments are basically similar to the method embodiments, the description is relatively simple. Refer to the description of the method embodiments for relevant content.

All embodiments in the specification are described in a progressive manner, with each embodiment focusing on differences from the other embodiments. The same and similar parts among the embodiments can be referred to each other.

It should be understood by a person skilled in the art that embodiments of the present invention may be provided as methods, apparatuses or computer program products. Therefore, embodiments of the present invention may be implemented using hardware, software or a combination thereof. Furthermore, embodiments of the present invention may take the form of a computer program product embodied in one or more computer-usable storage media (including but not limited to disk memory, CD-ROM and optical memory) having computer-usable program codes therein.

Embodiments of the present invention are described herein with reference to flowchart illustrations and/or block diagrams of methods, terminal devices (systems) and computer program products according to embodiments of the present invention. It should be understood that each flow and/or block of the flowchart illustrations and/or block diagrams, and combinations of flows and/or blocks in the flowchart illustrations and/or block diagrams, can be implemented by computer program instructions. These computer program instructions may be provided to a processor of a general purpose computer, special purpose computer, embedded processor or other programmable data processing terminal devices to produce a machine, such that the instructions, which execute via the processor of the computer or other programmable data processing terminal devices, create means for implementing the functions specified in one or more flows of the flowchart illustrations and/or one or more blocks of the block diagrams.

These computer program instructions may also be stored in a computer readable memory that can direct a computer or other programmable data processing terminal devices to function in a particular manner, such that the computer readable memory having instructions stored therein includes an article of manufacture including instructions which implement the functions specified in one or more flows of the flowchart illustrations and/or one or more blocks of the block diagrams.

These computer program instructions may also be loaded onto a computer or other programmable data processing terminal devices to cause a series of operational steps to be performed on the computer or other programmable terminal devices to produce a computer-implemented processing, such that the instructions which execute on the computer or other programmable terminal devices provide steps for implementing the functions specified in one or more flows of the flowchart illustrations and/or one or more blocks of the block diagrams.

While preferred embodiments of the present invention have been described, additional variations and modifications in those embodiments may occur to those skilled in the art once they learn of the basic inventive concepts. Therefore, it is intended that the appended claims shall be construed to include preferred embodiments and all such variations and modifications as fall within the scope of embodiments of the present invention.

Finally, it should be noted that relational terms such as first, second, and the like may be used herein solely to distinguish one entity or action from another entity or action without necessarily requiring or implying any such actual relationship or order between such entities or actions. As used herein, the terms "comprise", "include" or any other variation thereof are intended to cover a non-exclusive inclusion, such that a process, method, article or terminal device that includes a list of elements does not include only those elements, but may include other elements not explicitly listed or inherent to such process, method, article or terminal device. Without further restrictions, the elements defined by the sentence "including a..." do not exclude the existence of other identical elements in the process, method, article or terminal device including the elements.

A parking space display processing method and a vehicle provided are described in detail above. Specific examples are used herein to illustrate the principle and implementation of the present invention. The above embodiments are described merely to help understand the method of the present invention and the core ideas thereof. Meanwhile, for those skilled in the art, there may be changes in the specific implementation and application scope according to the ideas of the present invention. To sum up, the content of the specification should not be construed as limitations to the present invention.

**Claims**

1. A method for processing display of parking spaces, comprising:

   displaying (101, 301, 504, 601, 701) a first planar parking space contour for an available parking space and displaying a target 3D occupancy model for an unavailable parking space adjacent to the available parking space when a vehicle starts 3D parking;
   determining (102, 505, 604, 704) whether the target 3D occupancy model occludes a contour line of a target first planar parking space contour at a current display perspective, wherein the target 3D occupancy model is a vehicle model displayed on the unavailable parking space in a projection direction at the current display perspective, and the target first planar parking space contour is the first planar parking space contour displayed in the projection direction at the current display perspective; and
   performing (103, 306, 506, 605, 705) display occlusion processing when it is determined that the target 3D occupancy model occludes the contour line of the target first planar parking space contour, to enhance visibility of the available parking space for user selection during the 3D parking;
   wherein said determining whether the target 3D occupancy model occludes a contour line of the target first planar parking space contour comprises:

   determining (302) a projection length of the target 3D occupancy model based on the current display perspective;
   determining (303) a distance between the target 3D occupancy model and the target first planar parking space contour; and
   determining (304) that the target 3D occupancy model occludes the contour line of the target first planar parking space contour when the projection length is greater than the distance, or determining (305) that the target 3D occupancy model does not occlude the contour line of the target first planar parking space contour when the projection length is less than or equal to the distance;

   wherein said performing display occlusion processing comprises:
   weakening the display of the target 3D occupancy model, and/or enhancing the display of the target first planar parking space contour.

2. The method of claim 1, wherein said determining the projection length of the target 3D occupancy model based on the current display perspective comprises:

   determining an included angle between the current display perspective and the ground;
   determining a height of the target 3D occupancy model; and
   determining the projection length of the target 3D occupancy model based on the included angle and the height.

3. The method of claim 1 or 2, further comprising, before said determining whether a target 3D occupancy model occludes a contour line of a target first planar parking space contour:

   determining (602) a second parking space adjacent to a first parking space in a first preset direction when the first parking space is an available parking space, wherein the first preset direction is a direction opposite to the projection direction
   determining (603) a first planar parking space contour for the first parking space as the target first planar parking space contour; and determining (603) a 3D occupancy model for the second parking space as the target 3D occupancy model when the second parking space is an unavailable parking space.

4. The method of claim 1 or 2, further comprising, before said determining whether a target 3D occupancy model occludes a contour line of a target first planar parking space contour:

   determining (702) a second parking space adjacent to a first parking space in a second preset direction when the first parking space is an unavailable parking space, wherein the second preset direction is the projection direction
   determining (703) a 3D occupancy model for the first parking space as the target 3D occupancy model; and
   determining (703) a first planar parking space contour for the second parking space as the target first planar parking space contour when the second parking space is an available parking space.

5. The method of claim 1, further comprising, before said displaying a first planar parking space contour for an available parking space:

   determining (501) whether there is an obstacle in a current parking space when the current parking space is detected;
   determining (502) that the current parking space is an available parking space when it is determined that the current parking space is free from obstacles; and
   determining (503) that the current parking space is an unavailable parking space when it is determined that there is an obstacle in the current parking space.

6. The method of claim 1, further comprising:
   displaying a floating UI parking icon within the first planar parking space contour for the available parking space.

7. The method of claim 6, further comprising:
   skipping display of floating UI parking icons within first planar parking space contours for other available parking spaces when a target available parking space is selected.

8. A vehicle, comprising:

   a contour model display module (801), configured to display a first planar parking space contour for an available parking space and display a 3D occupancy model for an unavailable parking space adjacent to the available parking space when a vehicle starts 3D parking;
an occlusion determination module (802), configured to determine whether the target 3D occupancy model occludes a contour line of a target first planar parking space contour at a current display perspective, and call a display occlusion processing module when it is determined that the target 3D occupancy model occludes the contour line of the target first planar parking space contour, wherein the target 3D occupancy model is a vehicle model displayed on the unavailable parking space in a projection direction at the current display perspective, and the target first planar parking space contour is the first planar parking space contour displayed in the projection direction at the current display perspective; and
the display occlusion processing module (803), configured to perform display occlusion processing to enhance visibility of the available parking space for user selection during the 3D parking;
wherein the occlusion determination module is configured to:

   determine a projection length of the target 3D occupancy model based on the current display perspective;
   determine a distance between the target 3D occupancy model and the target first planar parking space contour; and
   determine that the target 3D occupancy model occludes the contour line of the target first planar parking space contour when the projection length is greater than the distance, or determine that the target 3D occupancy model does not occlude the contour line of the target first planar parking space contour when the projection length is less than or equal to the distance; and

wherein the display occlusion processing module is configured to weaken the display of the target 3D occupancy model, and/or enhance the display of the target first planar parking space contour, to perform display occlusion processing to enhance visibility of the available parking space for user selection during the 3D parking.

9. A computer-readable storage medium comprising a computer program stored thereon which, when executed by a processor, implements the method of any one of claims 1 to 7.

**Patentansprüche**

1. Verfahren zum Verarbeiten einer Anzeige von Parkplätzen, das Folgendes umfasst:

Anzeigen (101, 301, 504, 601, 701) eines ersten ebenen Parkplatzumrisses für einen verfügbaren Parkplatz und Anzeigen eines 3D-Ziel-Belegungsmodells für einen nicht verfügbaren Parkplatz neben dem verfügbaren Parkplatz, wenn ein Fahrzeug ein 3D-Parken beginnt,

Bestimmen (102, 505, 604, 704), ob das 3D-Ziel-Belegungsmodell in einer aktuellen Anzeigeperspektive eine Umrisslinie eines ersten ebenen Ziel-Parkplatzumrisses verdeckt, wobei es sich bei dem 3D-Ziel-Belegungsmodell um ein Fahrzeugmodell handelt, das auf dem nicht verfügbaren Parkplatz in einer Projektionsrichtung aus der aktuellen Anzeigeperspektive angezeigt wird, und es sich bei dem ersten ebenen Ziel-Parkplatzumriss um den ersten ebenen Parkplatzumriss handelt, der in der Projektionsrichtung aus der aktuellen Anzeigeperspektive angezeigt wird, und,

wenn bestimmt wird, dass das 3D-Ziel-Belegungsmodell die Umrisslinie des ersten ebenen Ziel-Parkplatzumrisses verdeckt, Durchführen (103, 306, 506, 605, 705) einer Anzeigeverdeckungsverarbeitung, um eine Sichtbarkeit des verfügbaren Parkplatzes für die Auswahl durch den Benutzer beim 3D-Parken zu verbessern, wobei das Bestimmen, ob das 3D-Ziel-Belegungsmodell eine Umrisslinie des ersten ebenen Ziel-Parkplatzumrisses verdeckt, Folgendes umfasst:

Bestimmen (302) einer Projektionslänge des 3D-Ziel-Belegungsmodells auf der Grundlage der aktuellen Anzeigeperspektive,

Bestimmen (303) eines Abstands zwischen dem 3D-Ziel-Belegungsmodell und dem ersten ebenen Ziel-Parkplatzumriss und Bestimmen (304), dass das 3D-Ziel-Belegungsmodell die Umrisslinie des ersten ebenen Ziel-Parkplatzumrisses verdeckt, wenn die Projektionslänge größer ist als der Abstand, oder Bestimmen (305), dass das 3D-Ziel-Belegungsmodell die Umrisslinie des ersten ebenen Ziel-Parkplatzumrisses nicht verdeckt, wenn die Projektionslänge maximal dem Abstand entspricht,

wobei das Durchführen der Anzeigeverdeckungsverarbeitung Folgendes umfasst: Abschwächen der Anzeige des 3D-Ziel-Belegungsmodells und/oder Verstärken der Anzeige des ersten ebenen Ziel-Parkplatzumrisses.

2. Verfahren nach Anspruch 1, wobei das Bestimmen der Projektionslänge des 3D-Ziel-Belegungsmodells auf der Grundlage der aktuellen Anzeigeperspektive Folgendes umfasst:

Bestimmen eines eingeschlossenen Winkels zwischen der aktuellen Anzeigeperspektive und dem Boden,
Bestimmen einer Höhe des 3D-Ziel-Belegungsmodells und
Bestimmen der Projektionslänge des 3D-Ziel-Belegungsmodells auf der Grundlage des eingeschlossenen Winkels und der Höhe.

3. Verfahren nach Anspruch 1 oder 2, das ferner vor dem Bestimmen, ob ein 3D-Ziel-Belegungsmodell eine Umrisslinie eines ersten ebenen Ziel-Parkplatzumrisses verdeckt, Folgendes umfasst:

Bestimmen (602) eines in einer ersten voreingestellten Richtung neben dem ersten Parkplatz liegenden zweiten Parkplatzes, wenn es sich bei dem ersten Parkplatz um einen verfügbaren Parkplatz handelt, wobei es sich bei der ersten voreingestellten Richtung um eine der Projektionsrichtung entgegengesetzte Richtung handelt,
Bestimmen (603) eines ersten ebenen Parkplatzumrisses für den ersten Parkplatz als ersten ebenen Ziel-Parkplatzumriss und
Bestimmen (603) eines 3D-Belegungsmodells für den zweiten Parkplatz als 3D-Ziel-Belegungsmodell, wenn es sich bei dem zweiten Parkplatz um einen nicht verfügbaren Parkplatz handelt.

4. Verfahren nach Anspruch 1 oder 2, das ferner vor dem Bestimmen, ob ein 3D-Ziel-Belegungsmodell eine Umrisslinie eines ersten ebenen Ziel-Parkplatzumrisses verdeckt, Folgendes umfasst:

Bestimmen (702) eines in einer zweiten voreingestellten Richtung neben einem ersten Parkplatz liegenden zweiten Parkplatzes, wenn es sich bei dem ersten Parkplatz um einen nicht verfügbaren Parkplatz handelt, wobei es sich bei der zweiten voreingestellten Richtung um die Projektionsrichtung handelt,
Bestimmen (703) eines 3D-Belegungsmodells für den ersten Parkplatz als 3D-Ziel-Belegungsmodell und
Bestimmen (703) eines ersten ebenen Parkplatzumrisses für den zweiten Parkplatz als ersten ebenen Ziel-Parkplatzumriss, wenn es sich bei dem zweiten Parkplatz um einen verfügbaren Parkplatz handelt.

5. Verfahren nach Anspruch 1, das ferner vor dem Anzeigen eines ersten ebenen Parkplatzumrisses für einen verfügbaren Parkplatz Folgendes umfasst:

Bestimmen (501), ob sich auf einem aktuellen Parkplatz ein Hindernis befindet, wenn der aktuelle Parkplatz erkannt wird,

Bestimmen (502), dass es sich bei dem aktuellen Parkplatz um einen verfügbaren Parkplatz handelt, wenn bestimmt wird, dass sich darauf keine Hindernisse befinden, und

Bestimmen (503), dass es sich bei dem aktuellen Parkplatz um einen nicht verfügbaren Parkplatz handelt, wenn bestimmt wird, dass sich darauf ein Hindernis befindet.

6. Verfahren nach Anspruch 1, das ferner Folgendes umfasst:

Anzeigen eines schwebenden Programmoberflächen-Parksymbols für den verfügbaren Parkplatz in dem ersten ebenen Parkplatzumriss.

7. Verfahren nach Anspruch 6, das ferner Folgendes umfasst:

Überspringen des Anzeigens von schwebenden Programmoberflächen-Parksymbolen für andere verfügbare Parkplätze in ersten ebenen Parkplatzumrissen, wenn ein verfügbarer Ziel-Parkplatz ausgewählt wird.

8. Fahrzeug, das Folgendes umfasst:

ein Umrissmodell-Anzeigemodul (801), das so konfiguriert ist, dass es einen ersten ebenen Parkplatzumriss für einen verfügbaren Parkplatz und ein 3D-Belegungsmodell für einen nicht verfügbaren Parkplatz neben dem verfügbaren Parkplatz anzeigt, wenn ein Fahrzeug ein 3D-Parken beginnt,

ein Verdeckungsbestimmungsmodul (802), das so konfiguriert ist, dass es bestimmt, ob das 3D-Ziel-Belegungsmodell eine Umrisslinie eines ersten ebenen Ziel-Parkplatzumrisses aus einer aktuellen Anzeigeperspektive verdeckt, und ein Anzeigeverdeckungsverarbeitungsmodul aufruft, wenn bestimmt wird, dass das 3D-Ziel-Belegungsmodell die Umrisslinie des ersten ebenen Ziel-Parkplatzumrisses verdeckt, wobei es sich bei dem 3D-Ziel-Belegungsmodell um ein Fahrzeugmodell handelt, das auf dem nicht verfügbaren Parkplatz in einer Projektionsrichtung aus der aktuellen Anzeigeperspektive angezeigt wird, und es sich bei dem ersten ebenen Ziel-Parkplatzumriss um den ersten ebenen Parkplatzumriss handelt, der in der Projektionsrichtung aus der aktuellen Anzeigeperspektive angezeigt wird, und

das Anzeigeverdeckungsverarbeitungsmodul (803), das so konfiguriert ist, dass es eine Anzeigeverdeckungsverarbeitung durchführt, um eine Sichtbarkeit des verfügbaren Parkplatzes für die Auswahl durch den Benutzer beim 3D-Parken zu verbessern,

wobei das Verdeckungsbestimmungsmodul so konfiguriert ist, dass es:

auf der Grundlage der aktuellen Anzeigeperspektive eine Projektionslänge des 3D-Ziel-Belegungsmodells bestimmt,

einen Abstand zwischen dem 3D-Ziel-Belegungsmodell und dem ersten ebenen Ziel-Parkplatzumriss bestimmt und

bestimmt, dass das 3D-Ziel-Belegungsmodell die Umrisslinie des ersten ebenen Ziel-Parkplatzumrisses verdeckt, wenn die Projektionslänge größer ist als der Abstand, oder

bestimmt, dass das 3D-Ziel-Belegungsmodell die Umrisslinie des ersten ebenen Ziel-Parkplatzumrisses nicht verdeckt, wenn die Projektionslänge maximal dem Abstand entspricht, und

wobei das Anzeigeverdeckungsverarbeitungsmodul so konfiguriert ist, dass es zum Durchführen einer Anzeigeverdeckungsverarbeitung zwecks Verbesserns einer Sichtbarkeit des verfügbaren Parkplatzes für die Auswahl durch den Benutzer beim 3D-Parken die Anzeige des 3D-Ziel-Belegungsmodells abschwächt und/oder die Anzeige des ersten ebenen Ziel-Parkplatzumrisses verstärkt.

9. Computerlesbares Speichermedium mit einem darauf gespeicherten Computerprogramm, das, wenn es von einem Prozessor ausgeführt wird, das Verfahren nach einem der Ansprüche 1 bis 7 umsetzt.

**Revendications**

1. Procédé de traitement d'affichage de places de stationnement, comprenant :

un affichage (101, 301, 504, 601, 701) d'un premier contour planaire de place de stationnement pour une place de stationnement disponible et un affichage d'un modèle d'occupation 3D cible pour une place de stationnement indisponible adjacente à la place de stationnement disponible lorsqu'un véhicule commence un stationnement 3D ;

une détermination (102, 505, 604, 704) de si le modèle d'occupation 3D cible occulte ou non une ligne de contour d'un premier contour planaire de place de stationnement cible à une perspective d'affichage actuelle, dans lequel le modèle d'occupation 3D cible est un modèle de véhicule affiché sur la place de stationnement indisponible dans une direction de projection à la perspective d'affichage actuelle, et le premier contour planaire de place de stationnement cible est le premier contour planaire de place de stationnement affiché dans la direction de projection à la perspective d'affichage actuelle ; et

une exécution (103, 306, 506, 605, 705) d'un traitement d'occultation d'affichage lorsqu'il est déterminé que le modèle d'occupation 3D cible occulte la ligne de contour du premier contour planaire de place de stationnement cible, afin d'améliorer la visibilité de la place de stationnement disponible pour une sélection par l'utilisateur pendant le stationnement 3D ;

dans lequel ladite détermination de si le modèle d'occupation 3D cible occulte ou non une ligne de contour du premier contour planaire de place de stationnement cible comprend :

une détermination (302) d'une longueur de projection du modèle d'occupation 3D cible sur la base de la perspective d'affichage actuelle ;

une détermination (303) d'une distance entre le modèle d'occupation 3D cible et le premier contour planaire de place de stationnement cible ; et

une détermination (304) du fait que le modèle d'occupation 3D cible occulte la ligne de contour du premier contour planaire de place de stationnement cible lorsque la longueur de projection est supérieure à la distance, ou une détermination (305) du fait que le modèle d'occupation 3D cible n'occulte pas la ligne de contour du premier contour planaire de place de stationnement cible lorsque la longueur de projection est inférieure ou égale à la distance ;

dans lequel ledit traitement d'occultation d'affichage comprend :

un affaiblissement de l'affichage du modèle d'occupation 3D cible, et/ou un renforcement de l'affichage du premier contour planaire de place de stationnement cible.

2. Procédé selon la revendication 1, dans lequel ladite détermination de la longueur de projection du modèle d'occupation 3D cible sur la base de la perspective d'affichage actuelle comprend :

une détermination d'un angle inclus entre la perspective d'affichage actuelle et le sol ;

une détermination d'une hauteur du modèle d'occupation 3D cible ; et

une détermination de la longueur de projection du modèle d'occupation 3D cible sur la base de l'angle inclus et de la hauteur.

3. Procédé selon la revendication 1 ou 2, comprenant en outre, avant ladite détermination de si un modèle d'occupation 3D cible occulte ou non une ligne de contour d'un premier contour planaire de place de stationnement cible :

une détermination (602) d'une seconde place de stationnement adjacente à une première place de stationnement dans une première direction prédéfinie lorsque la première place de stationnement est une place de stationnement disponible, dans lequel la première direction prédéfinie est une direction opposée à la direction de projection ;

une détermination (603) d'un premier contour planaire de place de stationnement pour la première place de stationnement en tant que premier contour planaire de place de stationnement cible ; et

une détermination (603) d'un modèle d'occupation 3D pour la seconde place de stationnement en tant que modèle d'occupation 3D cible lorsque la seconde place de stationnement est une place de stationnement indisponible.

4. Procédé selon la revendication 1 ou 2, comprenant en outre, avant ladite détermination de si un modèle d'occupation 3D cible occulte ou non une ligne de contour d'un premier contour planaire de place de stationnement cible :

une détermination (702) d'une seconde place de stationnement adjacente à une première place de stationnement dans une seconde direction prédéfinie lorsque la première place de stationnement est une place de stationnement indisponible, dans lequel la seconde direction prédéfinie est la direction de projection ;

une détermination (703) d'un modèle d'occupation 3D pour la première place de stationnement en tant que modèle d'occupation 3D cible ; et

une détermination (703) d'un premier contour planaire de place de stationnement pour la seconde place de stationnement en tant que premier contour planaire de place de stationnement cible lorsque la seconde place de stationnement est une place de stationnement disponible.

5. Procédé selon la revendication 1, comprenant en outre, avant ledit affichage d'un premier contour planaire de place de stationnement pour une place de stationnement disponible :

une détermination (501) visant à déterminer s'il y a un obstacle dans une place de stationnement actuelle lorsque la place de stationnement actuelle est détectée ;

une détermination (502) du fait que la place de stationnement actuelle est une place de stationnement disponible lorsqu'il est déterminé que la place de stationnement actuelle est exempte d'obstacles ; et

une détermination (503) du fait que la place de stationnement actuelle est une place de stationnement indisponible lorsqu'il est déterminé qu'il y a un obstacle dans la place de stationnement actuelle.

6. Procédé selon la revendication 1, comprenant en outre :
un affichage d'une icône de stationnement d'interface utilisateur flottante à l'intérieur du premier contour planaire de place de stationnement pour la place de stationnement disponible.

7. Procédé selon la revendication 6, comprenant en outre :
un saut d'affichage d'icônes de stationnement d'interface utilisateur flottantes à l'intérieur de premiers contours planaires de place de stationnement pour d'autres places de stationnement disponibles lorsqu'une place de stationnement disponible cible est sélectionnée.

8. Véhicule, comprenant :

un module d'affichage de modèle de contour (801), configuré pour afficher un premier contour planaire de place de stationnement pour une place de stationnement disponible et afficher un modèle d'occupation 3D pour une place de stationnement indisponible adjacente à la place de stationnement disponible lorsqu'un véhicule commence un stationnement 3D ;
un module de détermination d'occultation (802), configuré pour déterminer si le modèle d'occupation 3D cible occulte une ligne de contour d'un premier contour planaire de place de stationnement cible à une perspective d'affichage actuelle, et appeler un module de traitement d'occultation d'affichage lorsqu'il est déterminé que le modèle d'occupation 3D cible occulte la ligne de contour du premier contour planaire de place de stationnement cible, dans lequel le modèle d'occupation 3D cible est un modèle de véhicule affiché sur la place de stationnement indisponible dans une direction de projection à la perspective d'affichage actuelle, et le premier contour planaire de place de stationnement cible est le premier contour planaire de place de stationnement affiché dans la direction de projection à la perspective d'affichage actuelle ; et
le module de traitement d'occultation d'affichage (803), configuré pour exécuter un traitement d'occultation d'affichage afin d'améliorer la visibilité de la place de stationnement disponible pour une sélection par l'utilisateur pendant le stationnement 3D ;
dans lequel le module de détermination d'occultation est configuré pour :

déterminer une longueur de projection du modèle d'occupation 3D cible sur la base de la perspective d'affichage actuelle ;
déterminer une distance entre le modèle d'occupation 3D cible et le premier contour planaire de place de stationnement cible ; et
déterminer que le modèle d'occupation 3D cible occulte la ligne de contour du premier contour planaire de place de stationnement cible lorsque la longueur de projection est supérieure à la distance, ou déterminer que le modèle d'occupation 3D cible n'occulte pas la ligne de contour du premier contour planaire de place de stationnement cible lorsque la longueur de projection est inférieure ou égale à la distance ; et

dans lequel le module de traitement d'occultation d'affichage est configuré pour affaiblir l'affichage du modèle d'occupation 3D cible, et/ou renforcer l'affichage du premier contour planaire de place de stationnement cible, afin d'exécuter un traitement d'occultation d'affichage pour améliorer la visibilité de la place de stationnement disponible pour une sélection par utilisateur pendant le stationnement 3D.

9. Support de stockage lisible par ordinateur comprenant un programme informatique stocké sur celui-ci qui, lorsqu'il est exécuté par un processeur, met en œuvre le procédé selon l'une quelconque des revendications 1 à 7.

| | |
|---|---|
| displaying a first planar parking space contour for an available parking space and displaying a 3D occupancy model for an unavailable parking space when a vehicle starts 3D parking | 101 |
| determining whether a target 3D occupancy model occludes a contour line of a target first planar parking space contour based on a current display perspective | 102 |
| performing display occlusion processing when determining that the target 3D occupancy model occludes the contour line of the target first planar parking space contour | 103 |

Fig. 1

Fig. 2a

Fig. 2b

| displaying a first planar parking space contour for an available parking space and displaying a 3D occupancy model for an unavailable parking space when a vehicle starts 3D parking | 301 |

↓

| determining the projection length of a target 3D occupancy model based on a current display perspective | 302 |

↓

| determining a distance between the target 3D occupancy model and a target first planar parking space contour | 303 |

↓

| determining that the target 3D occupancy model occludes a contour line of the target first planar parking space contour when the projection length is greater than the distance | 304 |

↓

| determining that the target 3D occupancy model does not occlude the contour line of the target first planar parking space contour when the projection length is less than or equal to the relative distance | 305 |

↓

| performing display occlusion processing when it is determined that the target 3D occupancy model occludes the contour line of the target first planar parking space contour | 306 |

Fig. 3

Fig. 4

judging whether there is an obstacle in a current parking space when the current parking space is detected under a vehicle 3D parking mode — 501

determining that the current parking space is an available parking space when it is determined that the current parking space is free from obstacles — 502

determining that the current parking space is an unavailable parking space when it is determined that there is an obstacle in the current parking space — 503

displaying a first planar parking space contour for an available parking space and displaying a 3D occupancy model for an unavailable parking space — 504

determining whether a target 3D occupancy model occludes a contour line of a target first planar parking space contour based on a current display perspective — 505

performing display occlusion processing when it is determined that the target 3D occupancy model occludes the contour line of the target first planar parking space contour — 506

Fig. 5

| displaying a first planar parking space contour for an available parking space and displaying a 3D occupancy model for an unavailable parking space when a vehicle starts 3D parking | 601 |

| determining a second parking space adjacent to a first parking space in a first preset direction when the first parking space is an available parking space | 602 |

| determining a first planar parking space contour for the first parking space as a target first planar parking space contour, and determining a 3D occupancy model for the second parking space as a target 3D occupancy model when the second parking space is an unavailable parking space | 603 |

| determining whether the target 3D occupancy model occludes a contour line of the target first planar parking space contour based on a current display perspective | 604 |

| performing display occlusion processing when it is determined that the target 3D occupancy model occludes the contour line of the target first planar parking space contour | 605 |

Fig. 6

displaying a first planar parking space contour for an available parking space and displaying a 3D occupancy model for an unavailable parking space when a vehicle starts 3D parking | 701

determining a second parking space adjacent to a first parking space in a second preset direction when the first parking space is an unavailable parking space | 702

determining a 3D occupancy model for the first parking space as a target 3D occupancy model, and determining a first planar parking space contour for the second parking space as a target first planar parking space contour when the second parking space is an available parking space | 703

determining whether the target 3D occupancy model occludes a contour line of the target first planar parking space contour based on a current display perspective | 704

performing display occlusion processing when it is determined that the target 3D occupancy model occludes the contour line of the target first planar parking space contour | 705

Fig. 7

Contour model display module
801

Occlusion determination module
802

Display occlusion processing
module 803

Fig. 8

**EP 3 955 163 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 202010605442 A
- CN 110794970
- JP 2016118851 A
- JP 2000099894 A